# EUROPEAN PATENT APPLICATION

(11) **EP 1 190 958 A2**
(43) Date of publication of application: **27.03.2002**
(21) Application number: 01308157.5
(22) Date of filing: 26.09.2001
(51) Int. Cl.: B65D 51/20

(54) **Reclosable container**

(30) Priority: 26.09.2000 AU PR038300
(71) Applicant: Cryovac Australia Pty Ltd, Fawkner, Victoria 3060 (AU)
(72) Inventor: Stewart, Michael, Diamond Creek, Victoria 3089 (AU); Kremar, Frank, Diggers Rest, Victoria 3472 (AU); Bullock, Lance, Coronet Bay, Victoria 3984 (AU)
(74) Representative: Barlow, Roy James

(57) **Abstract**

A reclosable container (10) as shown in Figures 3 and 4, comprising:
a container having an opening (22) defined by a rim (18);
a reclosable lid (32) having a rim-engaging portion (34) and a recessed portion (36) inwardly of the rim-engaging portion; and
sealing sheet material (38) separate from the lid, the sealing sheet material extending across the opening and being removably secured to the container rim beneath the lid;
wherein the recessed portion of the lid (36) projects into the container opening (22) and the sealing sheet material has a recessed portion (38) which accommodates the recessed portion of the lid (36).

## Description

### BACKGROUND OF THE INVENTION

The present invention relates to the field of containers, particularly reclosable containers, that is containers having a lid, and to a method of forming a sealed container package.

Reclosable containers are desirable for a variety of reasons. For example, the contents may be subject to contamination, or spillage, if a container is not reclosed after first being opened.

Conventional containers with lids which can be opened and reclosed are not usually airtight, in which case they will not possess any sealing properties. Many products require a sealed environment prior to first being opened, not only to alleviate the risk of oxidation prior to the product being sold, but also to resist other contamination. Such products are commonly sold in containers with a sheet of film or foil sealed across the opening. If such products are unlikely to all be consumed immediately following removal of the sealing sheet material, a reclosable lid is commonly supplied with the container.

Many different forms of sealed reclosable containers have been proposed. By way of example, AU 58499/80 proposes a lid for a container comprising a panel of sheet material for covering the container opening, and a moulded plastic rim for engaging the rim of the container, the sheet material being bonded to the plastic rim of the lid during an injection moulding process in which the plastic rim is formed. The sheet material is a laminate and the bottom layer is sealed to the container rim when the lid is fitted to the container. Subsequently, when the lid is removed, the bottom layer separates from the remainder of the sheet material and remains bonded to the container. The bottom layer can be ruptured, peeled or cut away, for access to the contents. However, the lid can then be replaced to give protection to any remaining contents.

In this proposal, the formation of a specially adapted lid as well as the requirement of a panel of sheet material in laminate form adds complexity and cost to the manufacture of the container.

A sealed container is also disclosed in AU 63912/90. This disclosure addresses the problem of bonding the sealing sheet material to a narrow cylindrical upper edge of a container. This problem is overcome by bonding the sealing sheet material not only to the upper edge but also to an annular inner surface of the container rim which is inclined downwardly and inwardly, thereby increasing the bonded surface area and allowing for tolerances in the diameter of the container rim. It is further proposed that a container closed in such a way can additionally be covered with a reclosable cover.

Thermoformed or thin-walled injection moulded lids for containers such as the well known thermoformed or thin-walled containers used, for example, for butter or margarine commonly are shaped to increase the strength and/or flexibility of the lid at the container rim-engaging portion. Generally, this shaping involves recessing the central or inner portion of the lid so that when the lid is engaged with the container rim the recessed inner portion projects into the container opening. The recessed inner portion of the lid is connected to an inner wall of the rim-engaging portion which increases the flexibility of the rim-engaging portion and the overall strength of the lid.

Containers of the type described in the immediately preceding paragraph have been sealed with a sealing sheet material that is bonded to the upper edge of the container rim and extends in a planar manner across the container opening. Since such a sealing sheet material interferes with a lid of the type described in the immediately preceding paragraph, a different lid has been used. This lid is modified by forming the material of the lid into an annular inverted channel in the rim engaging portion which channel overlies the container rim. The inner portion of the lid extends from the bottom of an inner wall of the inverted channel across the container opening at the level of the upper edge of the container rim and overlies the sealing sheet material.

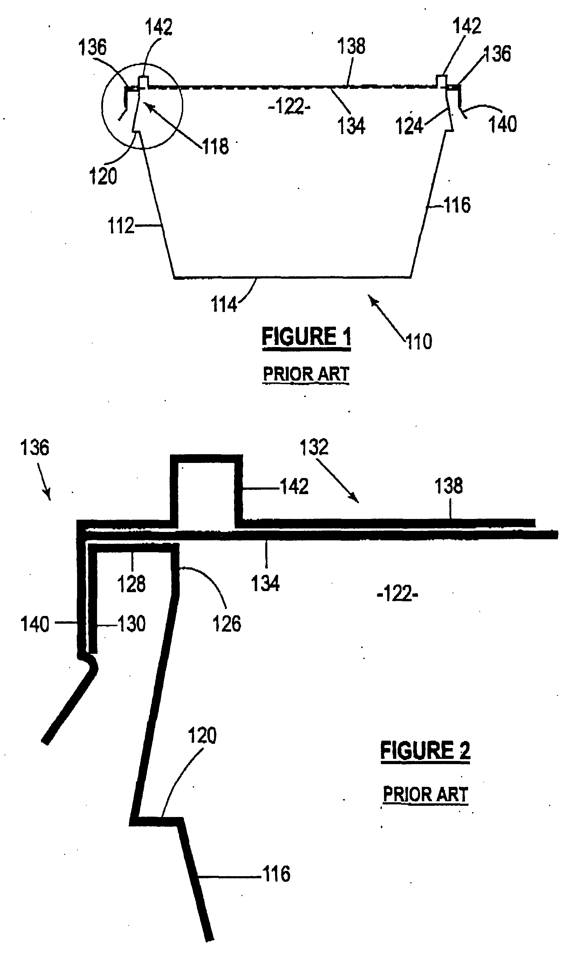

One such prior art sealed container and lid assembly 110 is illustrated in Figures 1 and 2. A conventional container 112 has a base 114 and continuous side wall 116 upstanding from the base. Adjacent the rim 118 of the container, the sidewall has an annular reinforcing flange 120. The rim 118, which defines the container opening 122, is in the form of an inverted channel 124 an inner wall 126 of which projects upwardly from the reinforcing flange 120. An annular base 128 of the inverted channel extends outwardly from the inner wall 126, generally transversely to the axis of the container, and an annular skirt 130 depends from the outer edge of the base 128. Such a container is of thin-walled plastics and is formed by injection moulding or thermoforming.

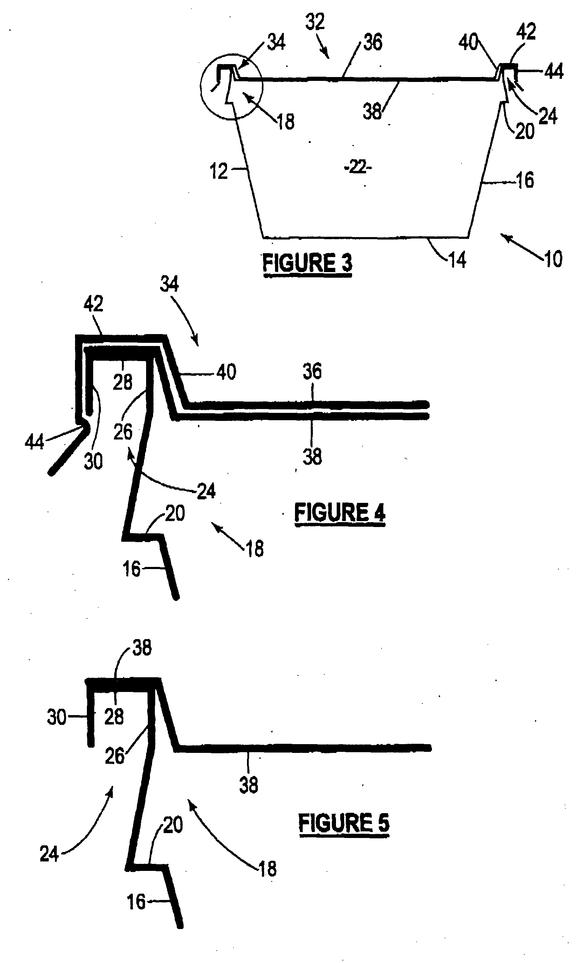

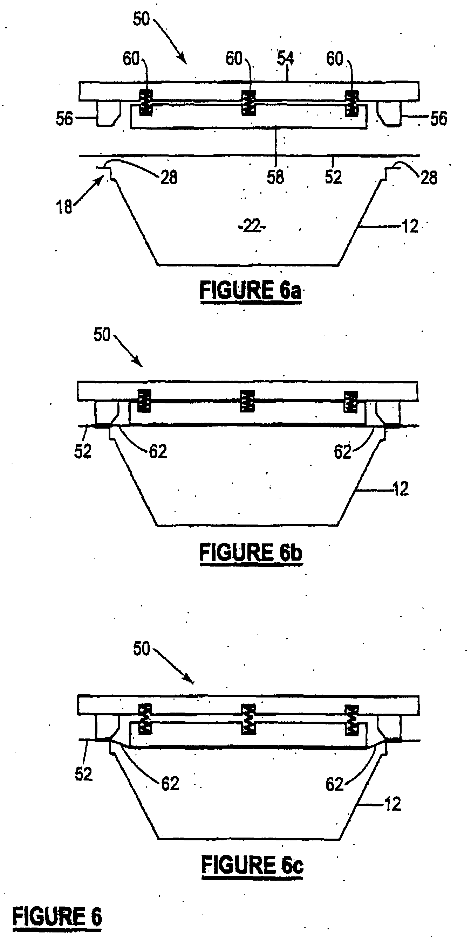

The lid 132 of the assembly 110 is modified from a conventional lid (illustrated in Figures 3 and 5) to accommodate a planar sealing sheet material 134 extending across the container opening 122 and bonded to the base 128 of the inverted channel 124 defining the container rim. The lid 132 has a container rim engaging portion 136 and a planar inner or central portion 138 which overlies the sealing sheet material 134. The rim engaging portion 136 includes an annular skirt 140 which cooperates with the depending skirt 130 of the container rim by snap engagement to hold the lid on the container 112.

Between the annular skirt 140 and the inner portion 138 of the lid, the rim engaging portion 136 includes an annular inverted channel portion 142 which substantially overlies and projects up from the base 128 of the container rim when the lid is engaged with the container. The lid 132 is thermoformed or injection moulded in thin-walled plastics material and the inverted channel portion 142 increases the overall rigidity of the lid while enhancing the flexibility of the annular skirt. The inverted channel portion also defines with the inner portion 138 a recess capable of receiving the base 114 of another container 112 so as to facilitate stacking of the container and lid assemblies 110.

### SUMMARY OF THE INVENTION

According to the present invention there is provided a reclosable container comprising:
a container having an opening defined by a rim;
a reclosable lid having a rim-engaging portion and a recessed portion inwardly of the rim-engaging portion; and
sealing sheet material separate from the lid, the sealing sheet material extending across the opening and being removably secured to the container rim beneath the lid;
wherein the recessed portion of the lid projects into the container opening and the sealing sheet material has a recessed portion which accommodates the recessed portion of the lid.

By the present invention, the cost and other disadvantages of providing a different lid when it is desired to provide sealing sheet material across a container opening are alleviated.

The lid is therefore preferably essentially conventional, wherein the rim-engaging portion of the lid has an inverted channel-shaped cross-section with an annular base which overlies the container rim, an outer skirt depending from the base outwardly of the container and an inner wall depending from the base within the container opening, with the recessed portion of the lid extending from a distal edge of the inner wall. The outer skirt of the lid will generally make an interference fit with the rim to engage the lid with the container, for example by screw-threaded engagement or, preferably, snap engagement. The base of the rim engaging portion of the lid preferably overlies the container rim adjacent thereto with the sealing sheet material therebetween.

The lid is preferably thermoformed or injection moulded, advantageously with a thin-walled construction. By thin-walled as used throughout this specification is meant a wall thickness of no greater than about lmm, more preferably between 0.2 and 0.6mm. The lid may be of any suitable plastics material, whether in mono- or multilayer form, selected for example from one or more of PET, polypropylene (PP), high impact polystyrene (HIPS), all types of polyethylene (PE), nylon and, in a multilayer structure, ethylene/vinyl acetate (EVA). In a preferred embodiment, the lid is thermoformed in PP.

The container may also be essentially conventional, for example a thermoformed or injection moulded container, particularly an injection moulded thin walled container formed from, for example, any of the materials mentioned above for the lid, whether with a mono- or multi-layer structure. The container may have a circular, oval or any other desired cross-section.

In a preferred embodiment the rim of the container comprises an upper end face supported at an inner edge by a wall of the container and a skirt depending from the upper end face. Generally the lid will cooperate with the skirt of the container rim to removably engage the lid with the container. Preferably, the upper end face of the rim extends substantially transversely to the axis of the container.

Depending upon the material of the sealing sheet material and of the container, the sealing sheet material may be heat sealed and/or adhesively engaged with the container rim, preferably with an upper end face of the container rim. Possible materials for the sealing sheet material include a metal foil such as aluminium, a polymer/metal laminate, a polymer film and a multi-layer polymer film. Suitable polymer films include polyethylene terephthalate (PET), nylon, polypropylene, polyethylene in any of its forms such as LDPE, LLDPE and HDPE, and polystyrene alone or in a variety of multilayer combinations. Many different types of multi-layer polymer films are known and may be suitable depending upon the container contents, the gas permeability and other desired characteristics of the film, the method of forming the recessed portion in the sealing sheet material and the method of bonding the sealing sheet material to the container rim. A simple multi-layer structure might be PET with a sealant layer of modified EVA. If it were desired to print the sealing sheet material a top layer of PE may be provided, bonded to the PET with an adhesive such as EVA.

A polymeric film may incorporate desirable additives such as oxygen scavenging materials.

Further according to the present invention, there is provided a method of forming a sealed container package which comprises providing a container having a container opening defined by a rim of the container,
providing a sealing sheet material across the container opening and removably securing the sealing sheet material to the container rim;
forming a recessed portion in the sealing sheet material whereby at least after the sealing sheet material has been secured to the container rim the recessed portion projects into the container opening; and
attaching a reclosable lid to the container rim, the lid projecting into the recessed portion of the sealing sheet material within the container opening.

Also depending upon the material of the sealing sheet material, the recessed portion in the sealing sheet material may be cold-formed, for example by deep drawing, or thermoformed. Thermoforming may be carried out with a vacuum or fluid pressure, but preferably a former is engaged with the sealing sheet material to form the recessed portion therein The sealing sheet material, or part of it, may be heated before, at the same time as and/or after the former is engaged with the sealing sheer material.

The recessed portion in the sealing sheet material need be substantially no deeper than the recessed inner portion of the lid. The recessed portion of the sealing sheet material may be at least partly formed before the sealing sheet material is secured to the container rim; for example, it may be preformed, that is before the sealing sheet material is provided across the container opening. However, preferably the recessed portion of the sealing sheet material is formed at the same time as and/or after the sealing sheet material is secured to the container rim.

Most preferably, the recessed portion of the sealing sheet material is formed after the sealing sheet material has been secured to the container rim, at least to the extent that the sealing sheet material is not drawn across the container rim as the recessed portion is formed. This is especially advantageous in a forming station in which multiple lines of containers are having the sealing sheet material secured thereto and the recessed portions formed simultaneously from a single sheet of the sealing sheet material, since it alleviates puckering caused when sealing sheet material is drawn across or from one container rim as the recessed portion is formed in the sealing sheet material on an adjacent container.

In a preferred embodiment, the sheet sealing material is a thermoformable film or foil and the action of heating the film for the thermoforming procedure also initiates securing of the film to the container rim. For a polymeric film, the heating of the film may soften it such that it can be heat sealed to the container rim or to a surface layer on the container rim. Alternatively, the heating may activate an adhesive or sealing layer on the sheet sealing material. Polyethylenes and modified EVAs are examples of adhesives or sealing materials which may have a similar sealing temperature range as the thermoforming temperature range of at least one of PET, polypropylene, nylon and polystyrene.

The thermoformable film or foil may be heated by contact heaters, induction, infra red, hot air or any other commonly used heating method. In the aforementioned preferred embodiment, the thermoformable film or foil is advantageously heated for the thermoforming process by means for holding the sealing sheet material on the container rim as it is bonded thereto.

The sheet sealing material may be cut or otherwise shaped to the desired size at any time, prior to, during or after it is secured to the container rim. In the preferred embodiment it is cut after being secured to the container rim.

### BRIEF DESCRIPTION OF THE DRAWINGS

One embodiment of a reclosable container and a method of forming same in accordance with the invention will now be described, by way of example only, with reference to the accompanying drawings in which:
Figure 1 is a cross-sectional view of a prior art sealed container and lid assembly;
Figure 2 is an enlargement of the circled portion of Figure 1;
Figure 3 is a cross-sectional view similar to that of Figure 1 but of a reclosable container in accordance with the invention;
Figure 4 is an enlargement of the circled portion of Figure 3;
Figure 5 is a view similar to Figure 4 but with the container lid omitted; and
Figures 6A to C show three successive stages of one method of forming the sealed container, without the lid, of Figures 3 to 5.

### DETAILED DESCRIPTION OF THE INVENTION

Referring to Figures 3 to 5, the sealed container and lid assembly 10 has a conventional thin-walled injection moulded or thermoformed container 12 which is identical to the container 112 described with reference to Figures 1 and 2. For convenience only, the container 12 will not be described again in detail and any subsequent reference to its component parts will be followed by a reference numeral corresponding to the reference numeral given to the same part of the container 112 but at one order of magnitude less (e.g., the base of the container 12 is designated by reference numeral 14 instead of 114 as in FIG. 1).

The lid 32 of the assembly 10 is also a conventional thermoformed or injection moulded thin-walled lid, but is of a type which hitherto has only been used with a container 12 without sealing sheet material extending across the container opening 22 and bonded to the container rim 18. The lid 32 has a container rim-engaging portion 34 and a central or inner portion 36 which is recessed and which, with reference to Figures 1 and 2, would interfere with the planar sealing sheet material 134 extending across the container opening 122. However, in accordance with the present invention, the lid 32 can be used because a sealing sheet material 38 extending across the container opening 22 and bonded to the container rim 18 is recessed from adjacent the container rim and projects into the container opening to accommodate the recessed portion 36 of the lid.

The rim-engaging portion 34 of the lid 32 also has an inverted channel-shaped cross section with a generally upright inner wall 40 from the lower edge of which the recessed inner portion 36 of the lid extends. A base 42 of the inverted channel extends from the upper edge of the inner wall 40 and closely overlies the base 28 of the container rim 18 with the sealing sheet material 38 bonded to the container rim therebetween. An annular skirt 44 depends from the outer edge of the base 42 of the rim-engaging portion 34 to cooperate by snap engagement with the annular skirt 30 of the container rim to remove and engage the lid 32 with the container 12.

Comparing the engaged lid 32 illustrated in Figures 3 and 4 with the lid 132 of Figures 1 and 2, it may be seen that the engaged lid 32 does not project upwardly substantially above the container and that the recessed inner portion 36 is within the container opening 22 so that a stack of container and lid assemblies 10 have a reduced height compared to the same number of stacked container and lid assemblies 110 using an identical container 112.
One method of forming the recessed sealing sheet material 38, which permits the use of the recessed lid 32, is described with reference to Figures 6a to c.

In Figure 6a, the container 12 having the desired contents (not shown) therein is disposed at a sealing and diermoforming station 50 with a thermoformable sheet 52 which will form the recessed sealing sheet material 38 supported across the opening 22 of the container. The sheet 52 may be supported between a supply roll and a take-up roll (not shown), or it may be pre-cut substantially to size in which case it may be supported between spaced grippers (not shown). In any event, the sheet 52 overlies the base 28 of the container rim 18 around the full periphery of the container.

Supported above the container 12 and sheet 52 in the sealing and thermoforming station 50 is a sealing and thermoforming platten 54 which is advanceable towards and withdrawable away from the container by any of a variety of known arrangements (not shown) including pneumatically hydraulically or by means of a servo motor. The platten 54 supports an annular sealing bar 56 on its underside. The shape of the annular sealing bar corresponds to that of the base 28 of the container rim 18 and the sealing bar 56 overlies the rim 18 so as to press the sheet 52 onto the upper face of the base 28 when the platten 54 is advanced.

Also supported from the underside of the platten 54, within the annular sealing bar 56, is a thermoforming plug 58. The plug 58 is shown suspended from the platten 54 by means of a plurality of springs 60, but these schematically represent any suitable means for permitting the plug 58 to be advanced away from and withdrawn towards the platten. Such means may comprise one or more springs, pneumatic or hydraulic means or a servo motor device.

As shown, in a rest state illustrated in Figure 6a, the plug 58 is advanced way from the platten 54 so as to project beneath the annular sealing bar 56. Thus, as the platten 54 is advanced the plug 58 engages the sheet 52 before the sealing bar 56. However, at least once the sheet 52 is supported on the rim 18, the tension in the sheet will overcome the bias in the springs 60 and the plug 58 will withdraw towards the platten 54, permitting the sealing bar 56 to press the sheet material 52 onto the rim 18 as the platten 54 is advanced further.

The sealing bar 56 is heated so as to effect the bonding of the sheet 52 onto the rim 18 when they are pressed together. Bonding may be achieved by the material of sheet 52 and of the container rim 18 being compatible so that the two materials fuse when they are heated. In a multilayer film 52, only a lowermost sealing layer need have this compatibility. Alternatively, a heat activated adhesive layer may be applied to one or both of the lower surface of the sheet 52 and the upper face of the base 28 of the container rim. This stage of the sealing and thermoforming process is shown in Figure 6b.

The heated sealing bar 56 also causes the annular portion 62 of sheet 52 between the plug 58 and the container rim 18 and sealing bar 56 to soften. As soon as softening of the material in portion 62 is sufficient, the bias in the springs 60 urging the plug 58 to advance away from the platten 54 stretches the annular portion 62 and causes the recess in the sheet material 52 to be formed. As soon as the plug has fully advanced, the platten 54 is withdrawn leaving the sheet material 52 bonded to the container rim with a thermoformed recess in the sheet material. Advantageously, the portion of the sheet 52 inwardly of the annular portion 62 is not stretch during the thermoforming process. However, if this is desired the plug 58 may also be heated.

The forming of the recess in the sheet 52 is illustrated schematically in Figure 6c. As will be appreciated from Figures 3 to 5 the recess must be of sufficient depth and cross-section to accommodate the lid 32. It is also to be noted that the container 12 is illustrated schematically in Figure 6, particularly in that the depending skirt 30 is omitted.

As alternatives to the described processes, the plug 58 may be rigidly supported by the platten 54, in which case the annular sealing bar 56 should be advanceable and withdrawable relative to the platten. In such an arrangement, the sealing bar would be initially advanced relative to the plug 58 and would initially press the sheet 52 onto the container rim 18 before the plug 58 engages the sheet 52. As the platten 54 is advanced further to form the recess in the sheet, the sealing bar must withdraw relative to the platten. Alternatively, in a similar arrangement, the sealing bar 56 may be fixed and the plug 58 relatively adjustable, but the plug 58 is withdrawn initially so that the sealing bar engages the sheet 52 first. These alternatives may be useful when the sheet 52 is at least substantially pre-cut and not supported, or not adequately supported, at its periphery.

The final cutting, if necessary, of the thermoformed sheet 52 may be effected by the sealing bar 56, by separate means (not shown) at the sealing and thermoforming station 50 or at a separate station. Cutting of the sheet may be performed by any industry standard such as a hot or cold steel rule knife or forged knife, or a punch and die assembly.

It will be understood that heating of the sheet 52 may be effected by other means than the sealing bar 56, In a variation the sheet 52 may be bonded to the container rim 18, and optionally cut, in one station, with the recess being formed in the sheet 52 in a separate station.

A major advantage of the described sealing and thermoforming station is that it may be incorporated as part of a standard container filling-line process, that is filling, sealing and closing, up to 60 containers or more per minute, with other optional procedures being included if desired. For example, if a modified atmosphere packaging process is called for, the ambient air in the head space above the contents in the container 12 may be at least partly replaced by the modified atmosphere as the sheet 52 is bonded to the container rim. Parallel sealing and thermoforming stations may be used in multiple filling lines so that, for example, for four lines up to 240 or more containers may be processed per minute.

Those skilled in the art will appreciate that the invention described herein is susceptible to variations and modifications other than those specifically described. It is to be understood that the invention includes all such variations and modifications which fall within its spirit and scope.

## Claims

1. A reclosable container (10) comprising:
a container having an opening (22) defined by a rim (18);
a reclosable lid (32) having a rim-engaging portion (34) and a recessed portion (36) inwardly of the rim-engaging portion; and
sealing sheet material (38) separate from the lid, the sealing sheet material extending across the opening and being removably secured to the container rim beneath the lid;
wherein the recessed portion of the lid (36) projects into the container opening (22) and the sealing sheet material has a recessed portion (38) which accommodates the recessed portion of the lid (36).

2. A reclosable container according to claim 1 wherein the rim of the container comprises an upper end face (28) supported at an inner edge by a wall of the container (26) and a skirt (30) depending from the upper end face.

3. A reclosable container according to claim 2 wherein the upper end face of the rim (28) extends substantially transversely to the axis of the container.

4. A reclosable container according to claim 2 or 3 wherein the sealing sheet material (38) is removably secured to the upper end face of the container rim (28).

5. A reclosable container according to any one of the preceding claims wherein the sealing sheet material (38) is selected from a group comprising a metal foil, a polymer/metal laminate, a polymer film and a multi-layer polymer film.

6. A reclosable container according to any one of the preceding claims wherein the recessed portion of the sealing sheet material (38) extends from adjacent the container rim (18).

7. A reclosable container according to any one of the preceding claims wherein the recessed portion of the sealing sheet material is formed by cold drawing or by thermoforming the sealing sheet material.

8. A reclosable container according to any one of claims 1 to 7 wherein the recessed portion of the sealing sheet material (38) is at least partly formed before the sealing sheet material is secured to the container rim (18).

9. A reclosable container according to any one of claims 1 to 7 wherein the recessed portion of the sealing sheet material (38) is formed at the same time as and/or after the sealing sheet material is secured to the container rim (18).

10. A method of forming a sealed container package (10) which comprises providing a container having a container opening (22) defined by a rim (18) of the container;
providing a sealing sheet material (38) across the container opening (22) and removably securing the sealing sheet material to the container rim (18);
forming a recessed portion in the sealing sheet material (38) whereby at least after the sealing sheet material has been secured to the container rim (18) the recessed portion projects into the container opening (22); and
attaching a reclosable lid (32) to the container rim (18), the lid projecting into the recessed portion of the sealing sheet material within the container opening (22).
